**Europäisches Patentamt**

**European Patent Office**

**Office européen des brevets**

(19)

(11) Veröffentlichungsnummer: **0 278 327
B1**

(12)

# EUROPÄISCHE PATENTSCHRIFT

(45) Veröffentlichungstag der Patentschrift:
**20.06.90**

(51) Int. Cl.⁵: **B62D 55/04**

(21) Anmeldenummer: **88101165.4**

(22) Anmeldetag: **27.01.88**

(54) Raupenkettenanordnung zum Umrüsten eines mit Rädern versehenen Kraftfahrzeugs in ein Kettenfahrzeug.

(30) Priorität: **30.01.87 DE 3702818**

(43) Veröffentlichungstag der Anmeldung:
**17.08.88 Patentblatt 88/33**

(45) Bekanntmachung des Hinweises auf die Patenterteilung:
**20.06.90 Patentblatt 90/25**

(84) Benannte Vertragsstaaten:
**AT BE CH DE ES FR GB GR IT LI LU NL SE**

(56) Entgegenhaltungen:
**DE-A- 2 026 295
DE-C- 1 045 250
US-A- 3 590 935
US-A- 3 710 886**

(73) Patentinhaber: **Gey, Leo, Stührmann's Höhe 17,
D-2805 Stuhr 2(DE)**

(72) Erfinder: **Gey, Leo, Stührmann's Höhe 17,
D-2805 Stuhr 2(DE)**

(74) Vertreter: **Sandmann, Joachim, Dr., Hirtenstrasse 19,
D-8012 Ottobrunn(DE)**

## Beschreibung

Die Erfindung betrifft eine Raupenkettenanordnung zur Umrüstung eines mit Rädern versehenen Kraftfahrzeugs in ein Kettenfahrzeug, bestehend aus zwei an gegenüberliegenden Fahrzeugseiten mit dem Fahrwerk des Kraftfahrzeugs verbindbaren Kettenaggregaten, an denen jeweils wenigstens zwei dem Antrieb und der Umlenkung einer Raupenkette dienende Räder gelagert sind, über die eine Raupenkette läuft, wobei jedem Kettenaggregat eine an die Antriebsachse des Kraftfahrzeugs anschließbare Drehmomentübertragungseinrichtung zum Antreiben des Antriebsrades zugeordnet ist und den beiden Kettenaggregaten Bremsen zugeordnet sind, die mittels einer vom Kraftfahrzeug aus betätigbaren Lenksteuereinrichtung separat betätigbar sind.

Eine derartige Raupenkettenanordnung ist bekannt (DE-PS 1 045 250). Sie bietet die Möglichkeit, das Kraftfahrzeug in Anpassung an die jeweiligen Bodenverhältnisse von einem Radfahrzeug in ein Kettenfahrzeug und umgekehrt umzurüsten. Die beiden Kettenaggregate sind in gleicher Weise ausgebildet und weisen eine die Länge des Kraftfahrzeugs übersteigende Länge auf, wobei in der montierten Stellung das Antriebskettenrad im Heckbereich des Fahrzeugs angeordnet ist und das Umlenkkettenrad nach vorne über das Fahrzeug vorsteht. Die Drehmomentübertragungseinrichtung weist zwei durch eine Übertragungskette antriebsmäßig verbundene Räder auf, von denen das eine nach Abnahme des betreffenden Hinterrades von der Antriebsachse des Kraftfahrzeugs auf diese montiert wird und das andere gleichachsig mit dem Antriebskettenrad verbunden ist. Das Umlenkkettenrad am vorderen Ende des Kettenaggregats ist koaxial mit einer Trommelbremse angeordnet, die ebenfalls nach Abnahme des betreffenden Vorderrades über ein Gestänge an den Vorderachsstummel des Kraftfahrzeugs angeschlossen wird, so daß die Lenkeinrichtung des Radfahrzeugs auch der Lenkung des Kettenfahrzeugs dient, weil ein Lenkeinschlag über das angeschlossene Gestänge zu einer entsprechenden Betätigung der Trommelbremse und damit zu einer Kettenbremsung auf nur einer Fahrzeugseite führt, was bekanntlich zu einer Richtungsänderung bzw. Kurvenfahrt führt. Dabei sind nach der Umrüstung die Kettenaggregate, welche die abgenommenen Räder ersetzen, im wesentlichen unter dem Fahrzeug angeordnet, über das sie seitlich im wesentlichen nur mit der hinteren Drehmomentübertragungseinrichtung und der vorderen Bremseinrichtung seitlich vorspringen.

Die bekannte Anordnung weist eine Reihe von Nachteilen auf. Dazu zählen die mühsame Umrüstung, die insbesondere dadurch bedingt ist, daß die Anordnung der Raupenketten unter dem Fahrzeug ein Aufbocken des Fahrzeugs erforderlich macht und daß die Fahrzeugräder abgenommen werden müssen. Erschwerend wirkt sich auch das vergleichsweise große Gewicht der Kettenaggregate aus, das durch die Aggregatlänge sowie die Drehmomentübertragungseinrichtung und die Bremseinrichtung bedingt ist, weil das in Stellung bringen der Kettenaggregate vor ihrer Montage nicht gerade einfach ist. Neben der Befestigung der Kettenaggregate bzw. ihrer Längsträger am Kraftfahrzeug sind ferner die Drehmomentübertragungseinrichtung an die Antriebsachse und das Bremsbetätigungsgestänge an den Vorderachsstummel anzuschließen. Diese Arbeiten können im allgemeinen nur in einem Spezialbetrieb durchgeführt werden. Eine häufige Umrüstung in Anpassung an sich ändernde Bodenverhältnisse kommt daher nicht in Betracht.

Ferner kann die Aufbewahrung der voluminösen und schweren Kettenanordnungen während des Radfahrbetriebs Schwierigkeiten machen. Insbesondere ist es auch praktisch nicht möglich oder zumindest sehr ungünstig, die beiden Kettenaggregate während des Radfahrbetriebs mitzuführen, beispielsweise auf einem Dachständer oder als Anhängelast, so daß auch aus diesem Grunde die Möglichkeiten der Umrüstung eingeschränkt sind und keine Flexibilität bezüglich der Umrüstung besteht.

Es ist allerdings bereits bekannt, bei einem Traktor zwei Kettenaggregate seitlich außerhalb des Fahrzeugs anzuordnen, wobei die Fahrzeugräder auch während des Kettenfahrbetriebs am Fahrzeug verbleiben und das Kettenantriebsrad koaxial mit der Antriebsachse verbunden ist (DE-AS 18 07 390). Hier gibt es jedoch keinen reinen Raupenkettenbetrieb sondern neben dem reinen Radfahrbetrieb nur einen kettenunterstützten Radfahrbetrieb, der jederzeit problemlos zugeschaltet werden kann, weil die Kettenanordnungen fest am Fahrzeug angeordnet sind und mittels eines absenkbaren Druckrollenschlittens aus der angehobenen Ruhestellung in die abgesenkte Betriebsstellung verlagerbar sind. Dabei ist das vordere Umlenkrad der Kettenanordnungen hinter dem Vorderrad angeordnet, das auch bei zusätzlichem Kettenbetrieb lenkbar bleibt. Abgesehen davon, daß hier kurze Zusatzraupen zur Anwendung kommen und ein reiner Kettenfahrbetrieb nicht möglich ist, ist keine Umrüstbarkeit in dem Sinne gegeben, daß die Kettenaggregate ganz entfernt werden können. Diese müssen vielmehr auch bei reinem Radfahrbetrieb stets mitgeführt werden und sind dann insbesondere auch wegen der Vergrößerung der Fahrzeugbreite hinderlich.

Dementsprechend liegt der Erfindung die Aufgabe zugrunde, eine zur echten Umrüstung dienende Raupenkettenanordnung der eingangs genannten Art zu schaffen, die eine einfache und schnelle Umrüstung ermöglicht, wobei die Kettenaggregate kompakt und vergleichsweise leicht sein sollen.

Diese Aufgabe wird erfindungsgemäß dadurch gelöst, daß die Kettenaggregate selbsttragend mit eigenem Fahrgestell ausgeführt sind, daß an jedem Kettenaggregat zwei Distanzstücke drehbar gelagert sind, die in dem Achsabstand des Kraftfahrzeugs entsprechendem Abstand zueinander angeordnet sind, daß die Distanzstücke mit der Radfelge des Kraftfahrzeugs axial fest verspannbar sind, daß die mit den angetriebenen Fahrzeugrädern verspannten Distanzstücke die Drehmomentübertragungseinrichtungen bilden und daß die Lenksteuereinrichtung als Bestandteil der Kettenaggregate vorgesehen ist und eine umorientierbare Bremsleitung aufweist, so daß zumindest das Betätigungsglied der Lenksteuereinrichtung leicht ein- und ausbaubar in einer Bedienungsstellung im Kraftfahrzeug angeordnet werden kann.

Alernativ kommt für entsprechend ausgestattete oder umrüstbare Kraftfahrzeuge auch die Lösung in Betracht, daß bei einem Kraftfahrzeug mit getrennten Bremseinrichtungen für die Fahrzeugräder auf gegenüberliegenden Fahrzeugseiten eine Umschalteinrichtung für die wahlweise gemeinsame oder einzelne Betätigung der getrennten Radbremseinrichtungen vorgesehen ist, welche zugleich die Kettenbremsen bilden, daß die Kettenaggregate selbsttragend mit eigenem Fahrgestell ausgeführt sind, daß an jedem Kettenaggregat zwei Distanzstücke drehbar gelagert sind, die in dem Achsabstand des Kraftfahrzeugs entsprechendem Abstand zueinander angeordnet sind, daß die Distanzstücke mit der Radfelge des Kraftfahrzeugs axial fest verspannbar sind, und daß die mit den angetriebenen Fahrzeugrädern verspannten Distanzstücke die Drehmomentübertragungseinrichtungen bilden.

Zweckmäßige Ausgestaltungen und Weiterbildungen ergeben sich aus den Unteransprüchen.

Zur Umrüstung des Fahrzeugs vom Radbetrieb in den Kettenbetrieb werden - unter Verbleib der Räder am Fahrzeug - mit den Radnaben Anschlußteile verbunden, wozu entweder die vorhandenen Radgewindebolzen dienen können oder anfänglich einmal vorzunehmende Schraubbefestigungsmaßnahmen an den Radnaben und/oder Radfelgen vorgesehen werden. Die Kettenanordnungen lassen sich bequem seitlich neben das Fahrzeug rollen, wobei die Distanzstücke auf die beiden Radachsen ausgerichtet werden. Dann erfolgt die Verbindung mit dem Fahrzeug, z.B. indem an jede Radnabe über das Anschlußteil ein Spannschloß angeschlossen und dieses betätigt wird, um das Distanzstück fest mit der Radnabe zu verspannen. Das Fahrzeug braucht zu diesem Zweck nicht aufgebockt oder angehoben werden. Falls höhere Kettenaggregate als die Radhöhe des treibenden Fahrzeugs verwendet werden sollen, kann die betreffende Radachse mittels eines Wagenhebers wie beim üblichen Radwechsel auf die für den Anschluß des Kettenaggregats erforderliche Höhe gebracht werden, wobei sich nach der Montage das Fahrzeug über die Kettenaggregate am Boden abstützt.

Mit den vorgenannten Maßnahmen ist die Umrüstung für den Kettenbetrieb bereits durchgeführt, was eine ebenso einfache umgekehrte Rückumrüstung auf den Radfahrbetrieb bedeutet. Die beiden Kettenaggregate sind z.B. jeweils mit einem eigenen Hydraulikbremssystem ausgerüstet. Die beiden Hauptbremszylinder mit Ölvorrat und Bedienungshebeln sind über eine biegsame Bremsleitung direkt mit den Bremsen des jeweiligen Kettenaggregates verbunden, entlüftet und einsatzbereit. Im Kraftfahrzeug ist lediglich eine Halterung für die beiden Hauptbremszylinder vorzusehen. Die Hauptbremszylinder werden griffbereit in der Nähe des Fahrzeugführers auf die dafür einmal angebrachte Halterung aufgesteckt, wobei die gegen Zusammendrücken geschützte Bremsleitung einfach durch die Türdichtung gelegt wird. Damit ist das Raupenkettenfahrzeug schon einsatzbereit. Es ergeben sich keine Montage der Bremsanlagen und keine Änderung der fahrzeugeigenen Bremsanlage. Nach Anbringung der Kettenaggregate ist ein Lenken mit der vorhandenen Lenkanlage des Kraftfahrzeugs nicht mehr möglich. Die Lenkung beim Kettenbetrieb erfolgt durch die Einzelbetätigung der linken oder rechten Kettenaggregatsbremse, wobei durch eine gleichzeitige Betätigung beider Bremshebel das Fahrzeug abgebremst und zum Stehen gebracht werden kann. Eine zusätzliche Sicherheit besteht durch die fahrzeugeigene Bremsanlage, da durch deren Betätigung ebenfalls beide Kettenaggregate zum Stillstand kommen.

Für Fahrzeuge, die serienmäßig auf eine seitengetrennte Links- und Rechtsbremsung umgestellt werden können (überwiegende landwirtschaftliche Fahrzeuge), können entsprechend der vorgenannten Alternativlösung Kettenaggregate auch ohne eigene Kettenbremsen verwendet werden. In diesem Fall werden die Kettenaggregate durch die fahrzeugeigene Bremsanlage links oder rechts gebremst und somit gelenkt.

Aus den vorstehenden Ausführungen ergibt sich, daß die erfindungsgemäßen Kettenaggregate auch vom Nichtfachmann ohne Spezialwerkzeuge in schneller und einfacher Weist montiert und auch ebenso einfach wieder abgenommen werden können. Das vergleichsweise geringe Gewicht und die im allgemeinen nur wenig über den Achsabstand hinausgehende Länge der Kettenanordnungen sind für deren Aufbewahrung und ggf. unmontierte Mitnahme von Vorteil. Dementsprechend ergibt sich für die erfindungsgemäße Raupenkettenanordnung ein weiter Einsatzbereich. Die Raupenkettenanordnung kann bei allen Fahrzeugen mit einer Ausgleichseinrichtung (Differential) zur Anwendung kommen, also nicht nur bei Lastwagen und Geländewagen sondern auch bei Personenkraftwagen.

Ein Ausführungsbeispiel der Erfindung wird nachfolgend anhand einer schematischen Zeichnung näher erläutert. Es zeigen:

Fig. 1 eine Draufsicht auf ein für den Kettenfahrbetrieb umgerüstetes Fahrzeug, wobei die Raupenkette des rechten Kettenaggregats weggelassen und verschiedene Teile eingezeichnet sind, obwohl sie eigentlich in der Draufsicht verdeckt sind;

Fig. 2 ein Kettenaggregat aus Fig. 1 in Seitenansicht, komplett mit Hydraulikbremsanlage und Bedienungshebel;

Fig. 3 eines der beiden Kettenaggregate ohne Raupenkette in Draufsicht;

Fig. 4 eine Fig. 1 entsprechende, teilweise geschnittene Teildarstellung einer bezüglich der Befestigung der Kettenaggregate am Fahrzeug abgewandelten Ausführungsform; und

Fig. 5 eine Explosionsdarstellung von Bauteilen, die bei der Ausführungsform gemäß Fig. 4 verwendet werden.

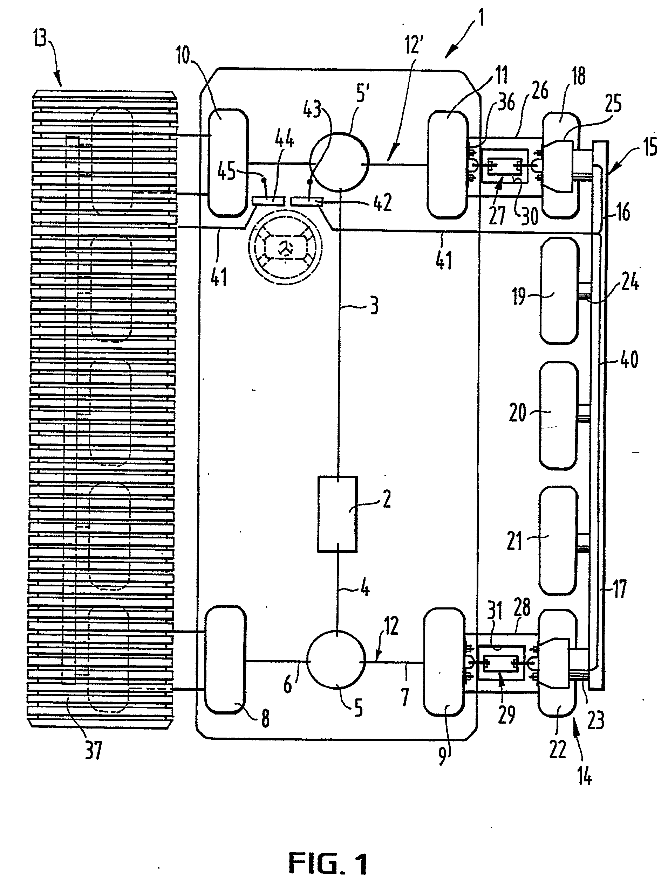

Gemäß Fig. 1 ist ein Kraftfahrzeug 1 mit einem nicht dargestellten Brennkraftmotor vorgesehen, an den ein Wechselgetriebe 2 angeschlossen ist. Vom Wechselgetriebe 2 gehen Gelenkwellen 3 und 4 aus. Die Gelenkwelle 4 treibt über eine Ausgleichseinrichtung in Form eines Differentialgetriebes 5 die Halbachsen 6 und 7 mit dem linken Hinterrad 8 bzw. dem rechten Hinterrad 9 an. Die Halbachsen 6 und 7 bilden die Hinterachse 12, und in die mit den Vorderrädern 10, 11 versehene Vorderradachse 12' ist ebenfalls ein Differentialgetriebe 5' eingebaut. Ggf. kann statt eines Allradantriebs auch ein Antrieb nur für die Hinterräder 8, 9 vorgesehen sein, wobei sich die Vorderräder 10, 11 frei und unabhängig voneinander drehen können. Selbiges gilt auch, in umgekehrter Weise, bei einem Kraftfahrzeug mit Vorderradantrieb.

Auf gegenüberliegenden Seiten des Kraftfahrzeugs 1 sind die Kettenaggregate 13 und 14 angeschlossen. Die beiden Kettenaggregate 13 und 14 sind in gleicher Weise ausgebildet. Sie umfassen jeweils ein im wesentlichen von einem Längsträger gebildetes Fahrgestell 15, das sich aus einem vorderen Rahmenlängsteil 16 und aus einem hinteren Rahmenlängsteil 17 zusammensetzt. Die beiden Rahmenlängsteile 16 und 17 sind teleskopisch miteinander verbunden, wobei sie auch Relativdrehungen zur gemeinsamen Längsachse ausführen können.

An jedem Kettenaggregat 13 und 14 sind an der dem Kraftfahrzeug 1 zugewandten Innenseite in Reihe ein vorderes Umlenkrad 18, drei Führungsräder 19, 20, 21 und eine hinteres Umlenkrad 22 drehbar gelagert, wobei entweder das vordere oder hintere oder auch beide Umlenkräder, je nach Fahrzeugtyp, als Antriebsräder Verwendung finden können. An den Radnaben 25 der beiden äußeren Räder 18 und 22 ist jeweils eine Bremstrommel oder Bremsscheibe vorhanden. Es wäre aber möglich, nur eines der beiden äußeren Räder jedes Kettenaggregates mit einer Bremstrommel oder Bremsscheibe auszurüsten. Der Achsabstand der beiden äußeren Räder 18 und 22 entspricht dem Achsabstand zwischen der Hinterachse 12 und der Vorderachse 12' des Kraftfahrzeugs 1. Die Anzahl und Baugröße der Führungsräder 19 bis 21 hängt vom jeweiligen Achsabstand des antreibenden Fahrzeugs 1 ab. Die Antriebsräder, Umlenkräder und Führungsräder können sowohl als Zahnrad wie auch als luftbereiftes Rad oder als Hartgummirad ausgebildet sein. Sie sind über Lagerachsstummel 23 bzw. 24 mit dem Fahrgestell 15 verbunden.

Die Kettenaggregate 13 und 14 sind bzw. werden im Rahmen der Umrüstung dadurch fest mit dem Kraftfahrzeug 1 verbunden, daß ihre äußeren Räder 18 und 22 mit den linken Fahrzeugrädern 8 und 10 bzw. mit den rechten Fahrzeugrädern 9 und 11 gekoppelt werden, wie es für die rechte Fahrzeugseite in Fig. 1 veranschaulicht ist. Dazu sind ein rohrförmiges vorderes Distanzstück 26 mit einem vorderen Spannschloß 27 sowie ein rohrförmiges hinteres Distanzstück 28 mit einem hinteren Spannschloß 29 vorgesehen. Das Spannschloß 27 bzw. 29 ist innerhalb des Distanzstücks 26 bzw. 28 angeordnet, das dem entsprechend mit zwei oder mehr Fenstern 30 bzw. 31 versehen ist, durch die das Spannschloß zugänglich und betätigbar ist. Zum Verbinden der Räder 8 bis 11 des Kraftfahrzeugs mit den Umlenkrädern 18, 22 der Kettenaggregate könnten auch Distanzstücke und Spannvorrichtungen anderer Bauart verwendet werden.

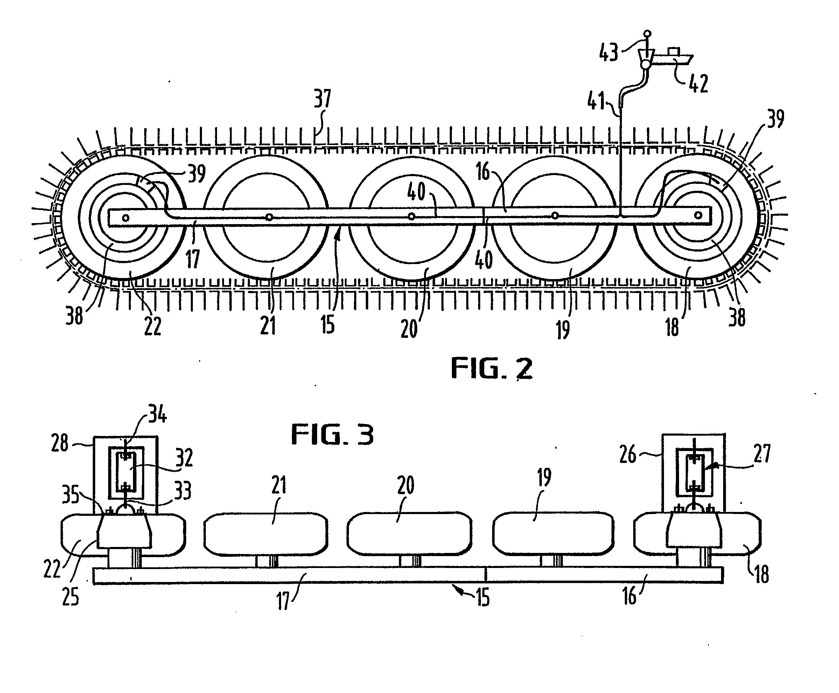

Wie auch aus Fig. 3 zu ersehen weist jedes Spannschloß 27,29 in bekannter Weise eine Gewindehülse 32 auf, deren Hälften ein Rechtsgewinde bzw. ein Linksgewinde aufweisen, die entsprechende Gewindestangen 33 und 34 aufnehmen. Die Gewindestange 33 ist am äußeren Ende in eine Ösenplatte 35 eingehakt oder auf andere Weise mit der Ösenplatte verbunden, die mit der Radnabe 25 fest verschraubt ist.

Das äußere Ende der Gewindestange 34 ist gemäß Fig. 1 in eine der Ösenplatte 35 entsprechende Anschlußplatte 36 eingehakt oder sonstwie mit der Anschlußplatte verbunden, die ihrerseits mit einem der Räder 8 bis 11 des Kraftfahrzeugs 1 durch Schrauben fest verbunden ist.

Es ist ohne weiteres ersichtlich, daß bei einer solchen Anordnung die Radpaare 9 und 22 bzw. 11 und 18 oder aber ihre Naben bzw. Felgen unter axialer Einspannung der Distanzstücke 26 und 28 fest miteinander verbunden werden können, so daß die Antriebskräfte über die betreffenden Distanzstücke auf die Kettenaggregate 13 und 14 übertragen werden können und diese das Gewicht des Kraftfahrzeugs aufnehmen. Dieses Kraftfahrzeuggewicht wird dann großflächig in den Boden eingeleitet, da über die Räder 18 bis 22 Raupenketten 37 umlaufen, wie es aus Fig. 1, links und aus Fig. 2 zu ersehen ist.

Wie in Fig. 2 dargestellt sind die Umlenk- bzw. Antriebsräder 18 und 22 jeweils mit einer Kettenaggregatbremse 38 versehen, der ein Radbremszylinder 39 zugeordnet ist. Die Bremsen 38 können sowohl als Trommelbremsen oder als Scheibenbremsen ausgeführt sein. Die Radbremszylinder 39 der Räder 22 und 18 sind über eine hydraulische Bremsleitung 40 miteinander verbunden, von der eine elastische Bremsleitung 41 zum rechten Hauptbremszylinder 42 bzw. zum linken Hauptbremszylinder 44 führt. Die Hauptbremszylinder sind Bestandteile der jeweiligen Kettenaggregate 13, 14 und werden zur Benutzung im Fahrzeuginneren in eine Halterung gesteckt, die in der Nähe des Fahrzeugführers angebracht ist. An den Hauptbremszylindern 42 und 44 befinden sich die Bedienungshebel 43 bzw. 45, über die die Druckbeaufschlagung der Radbremszylinder 39 gesteuert wird.

Wie aus Fig. 1 zu ersehen ist jedem Kettenaggregat 13 und 14 bzw. seinen Bremsen 38 ein eigener Hauptbremszylinder 42 bzw. 44 mit einem eigenen Bedienungshebel 43 bzw. 45 zugeordnet. Die Halterung für die linken und rechten Hauptbremszylinder 44 und 42 mit den Bedienungshebeln 45 und 43 ist wie aus Fig. 1 zu ersehen im Bereich des Lenkrades angeordnet, so daß sie vom Fahrersitz aus gut betätigbar sind. Die Teile 40 bis 45 bilden eine Lenksteuereinrichtung für den Kettenfahrbetrieb, wobei durch Einzelbetätigung der Bedienungshebel 43 und 45 eine Rechtsbremsung bzw. eine Linksbremsung bewirkt und dadurch eine Richtungsänderung des Fahrzeugs hervorgerufen wird. Eine gemeinsame Betätigung der Bedienungshebel 43 und 45 würde zu einer Abbremsung des Kettenfahrzeugs führen.

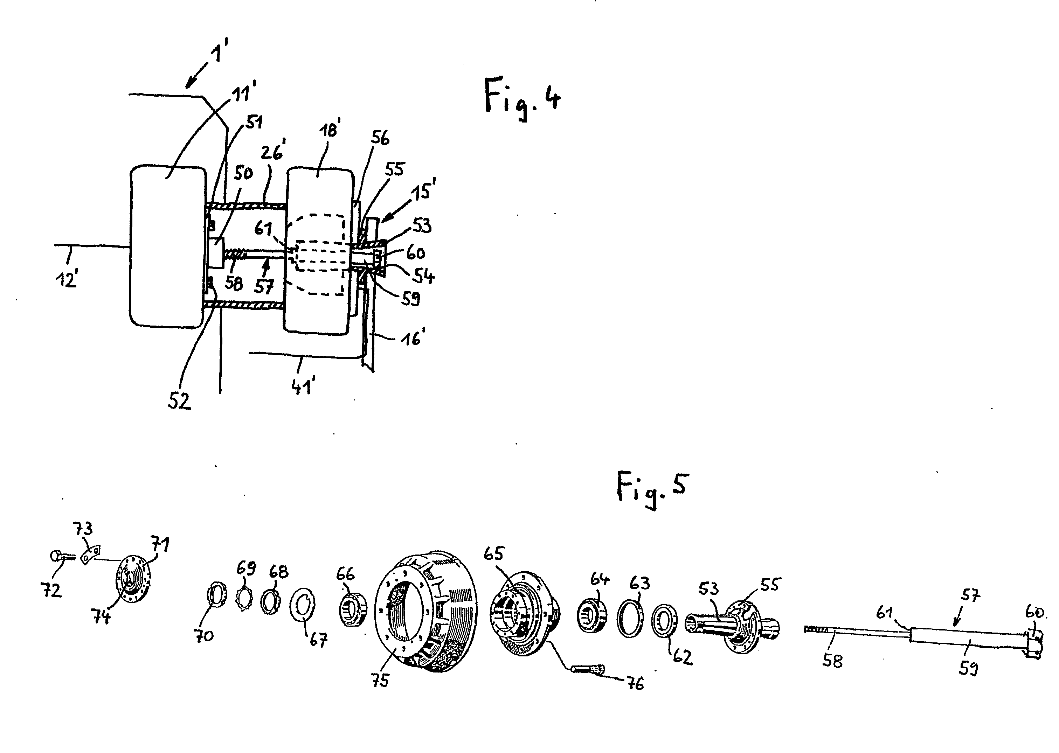

Die Befestigung der Kettenaggregate gemäß Figuren 4 und 5 erfolgt ohne Spannschlösser und unter Verwendung von Distanzstücken, die geschlossen ohne Fenster ausgeführt sind. Dabei ist an allen vier Fahrzugrädern eine Befestigung vorgesehen, wie es in Fig. 4 für das vordere rechte Rad dargestellt ist. Wegen der weitgehenden Übereinstimmung mit der Ausführungsform gemäß Figuren 1 bis 3 sind in Fig. 4 die entsprechenden Teile mit gleichen Bezugszeichen versehen und nur durch einen angeführten Unterscheidungsstrich verändert, so daß sich die erneute Beschreibung dieser Teile erübrigt.

Mit dem Fahrzeugrad 11' ist eine in der Verlängerung der Vorderachse 12' angeordnete starke Spannmutter 50 befestigt. Die Spannmutter 50 weist eine Befestigungsplatte 51 auf, die mit Bohrungen auf die Radbolzen des Rades 11' aufgesetzt ist und durch Muttern 52 fest angezogen ist.

Das auf das Fahrzeugrad 11' ausgerichtete Rad 18' ist am Rahmenlängsteil 16' des Fahrgestells 15' des Kettenaggregats auf einem Achsstummel 53 gelagert, der auf seiner ganzen Länge von einer zentralen Bohrung 54 durchsetzt ist. Der drehfeste Achsstummel 53 weist einen angeformten Befestigungsflansch 55 auf, mit dem er am Fahrgestell 15 befestigt ist. Ferner ist am Befestigungsflansch 55 eine drehfeste Ankerplatte 56 mit den nicht dargestellten Bremsbacken befestigt. Wie aus Fig. 4 zu ersehen, ist die Bremsleitung 41' durch die Ankerplatte 56 hindurch den Zylindern für die Betätigung der Bremsbacken zugeführt.

Aus der Zeichnung ist ferner eine Spannschraube 57 zu erkennen, die einen in die Spannmutter 50 eingeschraubten Gewindeabschnitt 58, einen Verlängerungsabschnitt 59 von größerem Durchmesser und einen Schraubenkopf 60 zum Ansetzen eines Werkzeugs aufweist. Am Übergang zwischen dem Gewindeabschnitt 58 und dem Verlängerungsabschnitt 59 ist eine Ringschulter 61 gebildet, die dem Fahrzeugrad 11' zugewandt ist. Wie aus Fig. 4 zu ersehen liegt die Spannschraube 57 in der Betriebsstellung mit ihrem Kopf 60 versenkt und mit Spiel in der Bohrung 54 des Achsstummels 53. Dabei kann die Bohrung 54 in nicht dargestellter Weise durch einen Deckel oder Stopfen verschlossen sein.

Die auseinandergezogene Darstellung gemäß Fig. 5 zeigt den Achsstummel 53 mit seinem Befestigungsflansch 55, die durch den Achsstummel 53 zu steckende Spannschraube 57 und die auf den Achsstummel 53 aufzuschiebenden Teile, nämlich einen Lauf ring 62, einen Simmerring 63, ein erstes Lager 64 für die Nabe 65 des Rades 18', ein zweites Lager 66 für die Nabe 65, einen Anlaufring 67 und eine Mutter 68, die auf das innere Ende des Achsstummels 53 aufgeschraubt wird, um die Nabe 65 in ihrer Einbaustellung zu halten. Der Mutter 68 sind ein Sicherungsblech 69 und eine Kontermutter 70 zugeordnet. Nach dem Anziehen der Muttern 68 und 70 wird das Sicherungsblech 69 verformt, um ein Lösen der Schraubverbindung zu verhindern.

Des weiteren ist ein scheibenförmiges Spannteil 71 vorgesehen, das mittels Schrauben 72, die durch ein Sicherungsblech 73 in ihrer Schraubstellung gesichert werden, an der Stirnseite der Nabe 65 befestigt wird. Das Spannteil 71 ist nicht mehr auf den Achsstummel 53 aufgeschoben. Seine Bohrung 74 ist nur so groß, daß der Gewindeabschnitt 58 der Spannschraube 57 durchtritt und die Ringschulter 61 der Spannschraube 57 sich axial an das Spannteil 71 anlegt. Dargestellt ist außerdem noch die Bremstrommel 75, die durch Schrauben 76 fest mit der Nabe 65 verbunden wird. Auf dieser Bremstrommel 75 ist das Rad 18' angeordnet. In Fig. 5 nicht dargestellt ist die Ankerplatte mit den Bremsbacken, die am Befestigungsflansch 55 des Achsstummels 53 anliegt.

Beim Einschrauben der Spannschraube 57 in die Spannmutter 50 drückt die Ringschulter 61 über das Spannteil 71 und die Nabe 65 das Distanzstück 26' gegen die Felge des Fahrzeugrades 11', wodurch eine feste Verspannung erreicht wird. Alle miteinander verspannten Teile einschließlich der Spannschraube 57 drehen sich miteinander gegenüber dem feststehenden Achsstummel 53. Daher führt die Verspannung nicht zu einem auf den Achsstummel 53 bzw. seinen Befestigungsflansch 55 wirkenden Axialdruck, was den Einbau besonderer Axialdrucklager überflüssig macht.

Der Vorteil der Ausbildung gemäß Figuren 4 und 15 liegt darin, daß die Spannschraube 57 von der Außenseite her gut zugänglich und mittels eines axial in die Bohrung 54 des Achsstummels 53 einführbaren Steckschlüssels betätigbar ist. Dementsprechend lassen sich die Kettenaggregate 13 und 14 bequem und schnell am Fahrzeug anbringen bzw. vom Fahrzeug lösen.

**Patentansprüche**

1. Raupenkettenanordnung zur Umrüstung eines mit Rädern versehenen Kraftfahrzeugs in ein Kettenfahrzeug, bestehend aus zwei an gegenüberliegenden Fahrzeugseiten mit dem Fahrwerk des Kraftfahrzeugs (1) verbindbaren Kettenaggregaten (13, 14), an denen jeweils wenigstens zwei dem Antrieb und der Umlenkung einer Raupenkette (37) dienende Räder (18, 22) gelagert sind, über die eine Raupenkette (37) läuft, wobei jedem Kettenaggregat eine an die Antriebsachse (12, 12') des Kraftfahrzeugs (1) anschließbare Drehmomentübertragungseinrichtung zum Antreiben des Antriebsrades (18, 22) zugeordnet ist und den beiden Kettenaggregaten (13, 14) Bremsen (38) zugeordnet sind, die mittels einer vom Kraftfahrzeug (1) aus betätigbaren Lenksteuereinrichtung (40 bis 45) separat betätigbar sind, dadurch **gekennzeichnet,** daß die Kettenaggregate (13, 14) selbsttragend mit eigenem Fahrgestell (15) ausgeführt sind, daß an jedem Kettenaggregat (13,14) zwei Distanzstücke (26, 28) drehbar gelagert sind, die in dem Achsabstand des Kraftfahrzeugs (1) entsprechendem Abstand zueinander angeordnet sind, daß die Distanzstücke (26, 28) mit der Radfelge des Kraftfahrzeugs (1) axial fest verspannbar sind, daß die mit den angetriebenen Fahrzeugrädern (8 bis 11) verspannten Distanzstücke (26, 28) die Drehmomentübertragungseinrichtungen bilden und daß die Lenksteuereinrichtung (40 bis 45) als Bestandteil der Kettenaggregate (13, 14) vorgesehen ist und eine umorientie bare Bremsleitung (40, 41) aufweist, so daß zumindest das Betätigungsglied (43, 45) der Lenksteuereinrichtung (40 bis 45) leicht ein- und ausbaubar in einer Bedienungsstellung im Kraftfahrzeug (1) angeordnet werden kann.

2. Raupenkettenanordnung nach Anspruch 1, dadurch **gekennzeichnet,** daß eine im Kraftfahrzeug (1) zu befestigende Halterung zum Anbringen der Lenksteuereinrichtung (40 bis 45) vergesehen ist.

3. Raupenkettenanordnung nach Anspruch 1 oder 2, dadurch **gekennzeichnet,** daß die Kettenbremsen (38) hydraulisch betätigbar und die Bremsleitungen (40, 41) der Lenksteuereinrichtung (40 bis 45) Bremsschläuche sind, die bei der Kettenaggregatmontage mit einem rechten bzw. einem linken Hauptbremszylinder (42 bis 44) und einem rechten bzw. einem linken Bedienungshebel (43 bzw. 45) in das Kraftfahrzeug (1) einführbar sind.

4. Raupenkettenanordnung zur Umrüstung eines mit Rädern versehenen Kraftfahrzeugs in ein Kettenfahrzeug, bestehend aus zwei an gegenüberliegenden Fahrzeugseiten mit dem Fahrwerk des Kraftfahrzeugs (1) verbindbaren Kettenaggregaten (13, 14),an denen jeweils wenigstens zwei dem Antrieb und der Umlenkung einer Raupenkette (37) dienende Räder (18, 22) gelagert sind, über die eine Raupenkette(37) läuft, wobei jedem Kettenaggregat eine an die Antriebsachse (12, 12') des Kraftfahrzeugs (1) anschließbare Drehmomentübertragungseinrichtung zum Antreiben des Antriebsrades (18, 22) zugeordnet ist und den beiden Kettenaggregaten (13, 14) Bremsen (38) zugeordnet sind, die mittels einer vom Kraftfahrzeug (1) aus betätigbaren Lenksteuereinrichtung (40 bis 45) separat betätigbar sind, dadurch **gekennzeichnet,** daß bei einem Kraftfahrzeug (1) mit getrennten Bremseinrichtungen für die Fahrzeugräder (8,10 und 9,11) auf gegenüberliegenden Fahrzeugseiten eine Umschalteinrichtung für die wahlweise gemeinsame oder einzelne Betätigung der getrennten Radbremseinrichtungen vorgesehen ist, welche zugleich die Kettenbremsen bilden, daß die Kettenaggregate (13, 14) selbsttragend mit eigenem Fahrgestell ausgeführt sind, daß an jedem Kettenaggregat (13, 14) zwei Distanzstücke (26, 28) drehbar gelagert sind, die in dem Achsabstand des Kraftfahrzeugs (1) entsprechendem Abstand zueinander angeordnet sind, daß die Distanzstücke (26, 28) mit der Radfelge des Kraftfahrzeugs (1) axial fest verspannbar sind, und daß die mit den angetriebenen Fahrzeugrädern (8 bis 11) verspannten Distanzstücke (26, 28) die Drehmomentübertragungseinrichtungen bilden.

5. Raupenkettenanordnung nach einem der Ansprüche 1 bis 4, dadurch **gekennzeichnet,** daß die Distanzstücke (26, 28) jeweils mittels eines über ein Anschlußteil (36) an der zugeordneten Radfelge befestigbaren Spannschlosses (27, 29) mit der Radfelge verspannbar sind.

6. Raupenkettenanordnung nach einem der Ansprüche 1 bis 5, dadurch **gekennzeichnet,** daß die Distanzstücke (26, 28) rohrförmig ausgebildet sind, das zugehörige Spannschloß (27, 29) aufnehmen und mit Betätigungsfenstern (30, 31) für das Spannschloß (27, 29) versehen sind.

7. Raupenkettenanordnung nach Anspruch 1 bis 4, dadurch **gekennzeichnet,** daß jedes Distanzstück(26') mit der Radfelge des Kraftfahrzeugs (1') über eine in der Radachse (12') verlaufende Spannschraube (57) verspannbar ist, die in eine an der Radfelge des Fahrzeugrades (11') befestigte Spannmutter (50) eingeschraubt ist und sich durch eine zentrale Bohrung (54) des am Kettenaggregat befestigten Achsstummels (53) erstreckt, auf dem die Nabe(65) des zugehörigen Rades (18') am Fahrgestell (15') des Kettenaggregats gelagert ist.

8. Raupenkettenanordnung nach Anspruch 7, dadurch **gekennzeichnet,** daß die Spannschraube (57) einen in die Spannmutter (50) einschraubbaren Gewindeabschnitt (58) und einen den Schraubenkopf (60) tragenden Verlängerungsabschnitt (59) von größerem Durchmesser aufweist und daß die zwischen den beiden Schraubenabschnitten (58 und 59) gebildete Ringschulter (61) sich beim Verspannen axial an ein Spannteil (71) anlegt, das an der dem Fahrzeugrad (11') zugewandten Stirnseite der Nabe (65) des Rades (18') des Kettenaggregats befestigt ist.

9. Raupenkettenanordnung nach Anspruch 7 oder 8, dadurch **gekennzeichnet,** daß der Kopf (60) der Spannschraube (57) in der Spannstellung innerhalb der Bohrung (54) des Achsstummels (53) angeordnet ist.

10. Raupenkettenanordnung nach einem der Ansprüche 1 bis 9, dadurch **gekennzeichnet,** daß die Distanzstücke (26, 28) mit Rädern (18, 22) der Kettenaggregate (13 bzw. 14) fest verbunden und dadurch am Kettenaggregat (13, 14) gelagert sind.

11. Raupenkettenanordnung nach Anspruch 10, dadurch **gekennzeichnet,** daß die der vorderen und der hinteren Fahrzeugachse (12, 12') zugeordneten Räder (18,22) der Kettenaggregate (13, 14) Umlenkräder sind, die am vorderen bzw. hinteren Ende der Kettenaggregate (13, 14) angeordnet sind und von denen die einer angetriebenen Fahrzeugachse (12, 12') zugeordneten zugleich Antriebsräder sind.

12. Raupenkettenanordnung nach einem der Ansprüche 1 bis 11, dadurch **gekennzeichnet,** daß die axiale Länge der Distanzstücke (26, 28) so bemessen ist, daß die angebauten Kettenaggregate (13, 14) im wesentlichen seitlich neben dem Kraftfahrzeug (1) angeordnet sind.

13. Raupenkettenanordnung nach einem der Ansprüche 1 bis 12, dadurch **gekennzeichnet,** daß die Distanzstücke (26, 28) so bemessen sind, daß sie bei angebauten Kettenaggregaten (13, 14) in den äußeren Felgenflanschrand der Fahrzeugräder (8 bis 11) eingreifen.

14. Raupenkettenanordnung nach einem der Ansprüche 1 bis 13, dadurch **gekennzeichnet,** daß die Kettenaggregate (13, 14) so dimensioniert sind, daß die Distanzstücke (26, 28) mit den an ihnen vorgesehenen Anschlußteilen (36) bereits vor der Kettenaggregatmontage in einer den Radachsen (12, 12') angepaßten Höhenlage angeordnet sind.

15. Raupenkettenanordnung nach einem der Ansprüche 1 bis 14, dadurch **gekennzeichnet,** daß das Fahrgestell (15) jeden Kettenaggregats (13, 14) in ein vorderes und ein hinteres Rahmenlängsteil (16 bzw. 17) unterteilt ist, die aneinander beweglich gelagert sind und Relativbewegungen um eine Längsachse ausführen können.

16. Raupenkettenanordnung nach Anspruch 15, dadurch **gekennzeichnet,** daß die Rahmenlängsteile (16,17) eines jeden Kettenaggregats (13, 14) in Längsrichtung teleskopisch miteinander verbunden sind, wobei die Ausfahrbewegung durch die Länge der Raupenkette (37) begrenzt ist.

17. Raupenkettenanordnung nach einem der Ansprüche 1 bis 16, dadurch **gekennzeichnet,** daß die Lenksteuereinrichtung (40 bis 45) von der Radlenkung des Kraftfahrzeugs (1) unabhängig betätigbar ist.

## Revendications

1. Dispositif de chenilles pour la transformation d'un véhicule automobile muni de roues en véhicule chenillé, comprenant deux systèmes de chenilles (13, 14) capables d'être reliés avec le châssis du véhicule automobile (1) sur deux côtés opposés du véhicule, chacun desdits systèmes supportant au moins deux poulies (18, 22) servant à l'entraînement et au renvoi d'une chaîne de chenille (37), une chaîne de chenille (37) passant sur lesdites poulies, et à chacun des systèmes de chenilles est associé un dispositif de transmission de couple servant à entraîner la poulie d'entraînement (18, 22) et capable d'être raccordé à l'essieu moteur (12, 12') du véhicule automobile (1), et des freins (38) sont associés aux deux systèmes de chenilles (13, 14) qui sont capables d'être actionnés séparément par l'intermédiaire d'un ensemble de commande de direction (40 à 45) susceptible d'être opéré à partir du véhicule automobile (1), caractérisé en ce que les systèmes de chenilles (13, 14) sont conçus comme des systèmes autoporteurs avec un châssis (15) propre; en ce que chacun des systèmes de chenilles (13, 14) supporte à rotation deux pièces d'écartement (26, 28) disposées à une distance l'une de l'autre qui correspond à l'empattement du véhicule automobile (1); en ce que les pièces d'écartement (26, 28) sont capables d'être rendues solidaires, par serrage axial, de la jante de roue du véhicule automobile (1); en ce que les pièces d'écartement reliées par serrage avec les roues motrices (8 à 11) du véhicule constituent les dispositifs de transmission de couple; et en ce que l'ensemble de commande de direction (40 à 45) est prévu comme composant des systèmes de chenilles (13, 14) et comporte une conduite de frein mobile (40, 41), de manière que, au moins l'organe d'actionnement (43, 45) de l'ensemble de commande de direction (40 à 45) peut être disposé, à montage et à démontage faciles, dans une orientation de travail dans le véhicule automobile (1).

2. Dispositif de chenilles selon la revendication 1, caractérisé en ce qu'il est prévu un support à attacher au véhicule automobile (1) et servant à monter l'ensemble de commande de direction (40 à 45).

3. Dispositif de chenilles selon la revendication 1 ou 2, caractérisé a en ce que les freins sur chenille (38) sont à commande hydraulique, et en ce que les conduites de frein (40, 41) de l'ensemble de commande de direction (40 à 45) sont des tuyaux flexibles de frein qui, au moment de l'installation des systèmes de chenilles sont capables d'être introduits dans le véhicule automobile (1) ensemble avec un cylindre principal droit et un cylindre principal gauche (42 à 44) et avec un levier de commande droit et un levier de commande gauche (43, respectivement 45).

4. Dispositif de chenilles pour la transformation d'un véhicule automobile muni de roues en véhicule chenillé, comprenant deux systèmes de chenilles (13, 14) capables d'être reliés avec le châssis du véhicule automobile (1) sur deux côtés opposés du véhicule, chacun desdits systèmes supportant au moins deux poulies (18, 22) servant à l'entraînement et au renvoi d'une chaîne de chenille (37), une chaîne de chenille (37) passant sur lesdites poulies, et à chacun des systèmes de chenilles est associé un dispositif de transmission de couple servant à entraîner la poulie d'entraînement (18, 22) et capable d'être raccordé à l'essieu moteur (12, 12') du véhicule automobile (1), et des freins (38) sont associés aux deux systèmes de chenilles (13, 14) qui sont capables d'être actionnés séparément par l'intermédiaire d'un ensemble de commande de direction (40 à 45) susceptible d'être opéré à partir du véhicule automobile (1), caractérisé en ce que, pour un véhicule automobile (1) muni de systèmes de frein séparés pour les roues (8, 10 et 9, 11) du véhicule sur les côtés opposés du véhicule, il est prévu un dispositif permettant de sélectionner à discrétion l'actionnement commun ou l'actionnement séparé des systèmes séparés de frein sur roue, ces derniers formant en même temps les freins sur chaîne de chénille; en ce que les systèmes de chenilles (13, 14) sont conçus comme systèmes autoporteurs avec un châssis propre; en ce que chacun des systèmes de chenilles (13, 14) supporte à rotation deux pièces d'écartement (26, 28) disposées à une distance l'une de l'autre qui correspond à l'empattement du véhicule automobile (1); en ce que les pièces d'écartement (26, 28) sont capables d'être rendues solidaires, par serrage axial, de la jante de roue du véhicule automobile (1); et en ce que les pièces d'écartement (26, 28), une fois reliées avec les roues motrices (8 à 11) du véhicule, constituent les dispositifs de transmission de couple.

5. Dispositif de chenilles selon l'une quelconque des revendications 1 à 4, caractérisé en ce que les pièces d'écartement (26, 28) sont chacune capables d'être reliées par serrage avec la jante de roue au moyen d'un tendeur (27, 29) susceptible d'être attaché à la jante de roue respective par l'intermédiaire d'un élément de raccordement (36).

6. Dispositif de chenilles selon l'une quelconque des revendications 1 à 5, caractérisé en ce que les pièces d'écartement (26, 28) sont réalisées sous forme de tubes, qu'elles logent le tendeur (27, 29) respectif, et qu'elles sont munies de fenêtres de manipulation pour le tendeur (27, 29).

7. Dispositif de chenilles selon la revendication 1 à 4, caractérisé en ce que chacune des pièces d'écartement (26') est capable d'être reliée avec la jante de roue du véhicule automobile (1') par l'intermédiaire d'une tige de rappel (57) qui s'étend selon l'essieu de roues (12') et est vissée dans un écrou de serrage (50) fixé sur la jante de la roue (11′) du véhicule et traverse un alésage central (54) de la fusée d'essieu (53) qui est attachée au système de chenilles et supporte le moyeu (65) de la poulie (18′) respective du châssis (15′) du système de chenilles.

8. Dispositif de chenilles selon la revendication 7, caractérisé en ce que la tige de rappel (57) comprend une partie filetée (58), susceptible d'être vissée dans l'écrou de serrage (50), et une prolongation (59) de diamètre plus grand qui porte la tête de vis (60), et en ce que, au moment du serrage, l'épaulement annulaire (61) formé entre les deux parties (58 et 59) de la tige s'applique axialement contre un élément de serrage (71) fixé sur la face du moyeu (65) de la poulie (18′) du système de chenilles qui est tournée vers la roue (11′) du véhicule.

9. Dispositif de chenilles selon la revendication 7 ou 8, caractérisé en ce que, dans la position de serrage, la tête (60) de la tige de rappel (57) se trouve disposée dans l'alésage (54) de la fusée d'essieu (63).

10. Dispositif de chenilles selon l'une quelconque des revendications 1 à 9, caractérisé en ce que les pièces d'écartement (26, 28) sont rendues solidaires des poulies (18, 22) des systèmes de chenilles (13, respectivement 14) et sont ainsi supportées par le système de chenilles (13, 14).

11. Dispositif de chenilles selon la revendication 10, caractérisé en ce que les poulies (18, 22) des systèmes de chenilles (13, 14) qui sont associées aux essieux avant et arrière (12, 12′) du véhicule sont des poulies de renvoi qui sont disposées à l'extrémité avant et arrière, respectivement, des systèmes de chenilles (13, 14) et dont celles associées à un essieu moteur (12, 12′) du véhicule sont en même temps des poulies d'entraînement.

12. Dispositif de chenilles selon l'une quelconque des revendications 1 à 11, caractérisé en ce que la longueur axiale des pièces d'écartement (26, 28) est telle que les systèmes de chenilles (13, 14) rattachés se trouvent disposés sensiblement latéralement à côté du véhicule automobile (1).

13. Dispositif de chenilles selon l'une quelconque des revendications 1 à 12, caractérisé en ce que les pièces d'écartement (26, 28) ont des dimensions telles que, après rattachement des systèmes de chenilles (13, 14), ils s'engagent dans le bord extérieur de la joue de jante des roues (8 à 11) du véhicule.

14. Dispositif de chenilles selon l'une quelconque des revendications 1 à 13, caractérisé en ce que les systèmes de chenilles (13, 14) ont des dimensions telles que les pièces d'écartement (26, 28) avec les organes de raccordement (36) prévus sur elles se trouvent disposées à un niveau adapté aux essieux de roues (12, 12′) déjà avant le montage des dispositifs de chenilles.

15. Dispositif de chenilles selon l'une quelconque des revendications 1 à 14, caractérisé en ce que le châssis (15) de chacun des systèmes de chenilles (13, 14) est subdivisé en une partie longitudinale avant et une autre arrière (16 et 17, respectivement) qui se supportent mutuellement de manière à pouvoir se déplacer et peuvent exécuter des mouvements relatifs autour d'un axe longitudinal.

16. Dispositif de chenilles selon la revendication 15, caractérisé en ce que les parties longitudinales (16, 17) du châssis de chacun des systèmes de chenilles (13, 14) sont reliées l'une à l'autre de manière à pouvoir exécuter un mouvement télescopique en direction longitudinale, le mouvement d'extension étant limité par la longueur de la chaîne de chenille (37).

17. Dispositif de chenilles selon l'une quelconque des revendications 1 à 16, caractérisé en ce que l'ensemble de commande de direction (40 à 45) est capable d'être actionné indépendamment du système de direction des roues du véhicule automobile (1).

## Claims

1. Track arrangement for converting a wheeled automotive vehicle into a tracked vehicle, consisting of two track systems (13, 14) capable of being connected to the chassis of the automotive vehicle (1) on opposite sides of said vehicle, said track systems each supporting at least two wheels (18, 22) designed to drive and turn round a track chain (37), a track chain (37) running over said wheels, each of said track systems having a torque transmission means assigned thereto which is connectable to the drive axle (12, 12′) of the automotive vehicle (1) for driving the driving wheel (18, 22), and brakes (38) being associated with both track systems (13, 14), said brakes being actuatable independently of each other through a steering control device (40 to 45) operable from the automotive vehicle (1), characterized in that the track systems (13, 14) are arranged to be self-supporting having their own chassis (15), in that each track system (13, 14) has two spacers (26, 28) rotatably supported thereon and spaced from each other by a distance corresponding to that between the axles of the automotive vehicle (1), in that the spacers (26, 28) are capable of being axially securely clamped against the wheel rim of the automotive vehicle (1), in that the spacers (26, 28) which are clamped against the driven vehicle wheels (8 to 11) constitute the torque transmission devices, and in that the steering control device (40 to 45) is provided as part of the track systems (13, 14) and comprises a mobile brake line (40, 41), such that at least the actuator (43, 45) of the steering control device (40 to 45) may be disposed, arranged for easy installation and removal, in an operating position within the automotive vehicle (1).

2. The track arrangement according to claim 1, characterized in that for mounting the steering control device (40 to 45), it is provided with a bracket to be fixed within the automotive vehicle (1).

3. The track arrangement according to claim 1 or 2, characterized in that the track brakes (38) are hydraulically operated, and in that the brake lines (40, 41) of the steering control device (40 to 45) are brake hoses which, when mounting the track systems, are capable of being introduced into the automotive vehicle (1) together with a respective right and left master brake cylinder (43 to 44) and a respective right and left operating lever (43 and 45).

4. Track arrangement for converting a wheeled automotive vehicle into a tracked vehicle, consisting of two track systems (13, 14) capable of being connected to the chassis of the automotive vehicle (1) on opposite sides of said vehicle, these track systems each supporting at least two wheels (18, 22) designed to drive and turn round a track chain (37), a track chain (37) running over said wheels, each of said track systems having a torque transmission means assigned thereto which is connectable to the drive axle (12, 12') of the automotive vehicle (1) for driving the driving wheel (18, 22), and brakes (38) being associated with both track systems (13, 14), said brakes being actuatable independently of each other through a steering control device (40 to 45) operable from the automotive vehicle (1), characterized in that with an automotive vehicle (1) having separate brake systems for the vehicle wheels (8, 10 and 9, 11) on opposite sides of the vehicle, a change-over device is provided for selective common or independent operation of the separate wheel brake systems which at the same time form the track brakes, in that the track systems (13, 14) are designed to be self-supporting having their own chassis, in that each track system (13, 14) has two spacers (26, 28) rotatably supported thereon and spaced from each other by a distance corresponding to that between the axles of the automotive vehicle (1), in that the spacers (26, 28) are capable of being axially securely clamped against the wheel rim of the automotive vehicle (1), and in that the spacers (26, 28) which are clamped against the driven vehicle wheels (8 to 11) constitute the torque transmission devices.

5. Track arrangement according to any of claims 1 to 4, characterized in that the spacers (26, 28) are each capable of being clamped to the wheel rim by means of a turnbuckle (27, 29) which may be secured to the associated wheel rim through a connection element (36).

6. Track arrangement according to any of claims 1 to 5, characterized in that the spacers (26, 28) are of tubular configuration, accommodate the respective turnbuckle (27, 29) and are formed with manipulating windows (30, 31) for the turnbuckle (27, 29).

7. Track arrangement according to claims 1 to 4, characterized in that each spacer (26') is capable of being clamped to the wheel rim of the automotive vehicle (1') through a tightening screw (57) extending in the wheel axis (12'), said tightening screw being threaded into a tightening nut (50) fixed to the wheel rim of the vehicle wheel (11') and extending through a central bore (54) of the axle stub (53) which is secured to the track system and supports the hub (65) of the respective wheel (18') on the chassis (15) of the track system.

8. Track arrangement according to claim 7, characterized in that the tightening screw (57) has a threaded portion (58) threadingly engageable into the tightening nut (50) and an extension (59) of larger diameter which carries the screw head (60), and in that, during tightening, the annular shoulder (61) formed between both screw portions (58 and 59) engages axially with a clamping element (71) which is secured to that face of the hub (65) of the wheel (18') of the track system which faces the vehicle wheel (11').

9. Track arrangement according to claim 7 or 8, characterized in that in the clamping position, the head (60) of tightening screw (57) is disposed within the bore (54) of the axle stub (53).

10. Track arrangement according to any of claims 1 to 9, characterized in that the spacers (26, 28) are fast with wheels (18, 22) of the respective track systems (13 or 14) and are thereby supported on track system (13, 14).

11. Track arrangement according to claim 10, characterized in that the wheels (18, 22) of the track systems (13, 14) associated with the front and the rear vehicle axle (12, 13') are roller guides which are disposed at the respective front and rear ends of the track systems (13, 14) and of which those associated with a driven vehicle axle (12, 12') are at the same time driving wheels.

12. Track arrangement according to any of claims 1 to 11, characterized in that the axial length of the spacers (26, 28) is so dimensioned that, upon installation, the track systems (13, 14) are arranged generally alongside of the automotive vehicle (1).

13. Track arrangement according to any of claims 1 to 12, characterized in that the spacers (26, 28) are so dimensioned that, upon installation of the track systems (13, 14), they engage with the outer edge of the rim flange of the vehicle wheels (8 to 11).

14. Track arrangement according to any of claims 1 to 13, characterized in that the track systems (13, 14) have dimensions such that the spacers (26, 28) together with the connecting elements (36) provided thereon are disposed at a level adapted to the wheel axles (12, 12') already prior to the installation of the track systems.

15. Track arrangement according to any of claims 1 to 14, characterized in that the chassis (15) of each track system (13, 14) is subdivided into a front and a rear longitudinal frame portion (16, 17) which are movably supported one on the other and are able to make relative movements around a longitudinal axis.

16. Track arrangement according to claim 15, characterized in that the longitudinal frame portions (16, 17) of each track system (13, 14) are telescopingly connected to each other in the longitudinal direction, the extending movement being limited by the length of the track chain (37).

17. Track arrangement according to any of claims 1 to 16, characterized in that the steering control device (40 to 45) is capable of being operated independently of the wheel steering of the automotive vehicle (1).

FIG. 1

FIG. 2

FIG. 3

Fig. 4

Fig. 5